# EUROPÄISCHE PATENTSCHRIFT

(11) **EP 2 718 634 B1**
(45) Veröffentlichungstag und Bekanntmachung des Hinweises auf die Patenterteilung: **22.07.2015**
(21) Anmeldenummer: 12729863.6
(22) Anmeldetag: 06.06.2012
(51) Int. Cl.: H05B 3/82, H05B 3/42, F28D 20/02, F28F 21/06, F28D 20/00, H05B 3/14, F28F 21/02, F24H 7/04, F24D 19/10, F24D 11/00, F24H 9/20

(54) **VORRICHTUNG UND VERFAHREN ZUM ERWÄRMEN EINES MEDIUMS**
DEVICE AND METHOD FOR HEATING A MEDIUM
DISPOSITIF ET PROCÉDÉ DE CHAUFFAGE D'UN FLUIDE

(30) Priorität: 09.06.2011 DE 102011105214
(43) Veröffentlichungstag der Anmeldung: 16.04.2014
(73) Patentinhaber: Ganz, Renate, 96145 Sesslach (DE)
(72) Erfinder: Ganz, Johann, 96145 Sesslach (DE)
(74) Vertreter: Schneider, Andreas
(86) Internationale Anmeldenummer: PCT/EP2012/002421
(87) Internationale Veröffentlichungsnummer: WO 2012/167934

(56) Entgegenhaltungen:
- DE-A1-102009 044 697
- DE-U1-202008 013 602
- GB-A- 2 276 082
- US-A1- 2002 011 482
- US-A1- 2007 212 036

## Beschreibung

Die Erfindung betrifft eine Vorrichtung und ein Verfahren zum Erwärmen eines Mediums, wobei es sich bei dem Medium vorzugsweise um ein Medium handelt, wie es in einem Pufferspeicher einer Heizungsanlage verwendet wird.

In Heizungsanlagen werden Wärmetauscher zum Einspeisen und Entnehmen von Wärmeenergie verwendet. Besonders im Bereich der Solarthermie werden dabei Pufferspeicher eingesetzt, die nicht benötigte Wärmeenergie zwischenspeichern. Als Speichermedium dient häufig Wasser. Es sind jedoch auch Pufferspeicher bekannt, die mit Latentwärmespeichern arbeiten. Dabei werden die Behälter, welche die Phasenwechselmaterialien (PCM) enthalten, üblicherweise in einem Wärmeübertragungsmedium, beispielsweise Wasser, aufbewahrt. Das Aufheizen des Phasenwechselmaterials erfolgt dann dadurch, daß Wärmeenergie über das Wärmeübertragungsmedium in die PCM-Behälter eingebracht wird.

In DE 10 2009 044 697 A1 ist ein Kunststofftank mit Carbon-Heizelementen zur Erwärmung des sich in dem Tank befindenden Mediums beschrieben. Dieses Dokument offenbart eine Vorrichtung gemäß den Oberbegriff des Anspruchs 1, und ein Verfahren gemäß den Oberbegriff des Anspruchs 13. In GB 2 276 082 A ist die Verwendung von Heizelementen aus einem mit Kohlenstoff versehenen Kunststoff zum Aufheizen von Badewannen erwähnt.

Eine Aufgabe der vorliegenden Erfindung ist es, eine Möglichkeit für eine besonders effiziente Erwärmung eines Mediums anzugeben. Diese Aufgabe wird durch die in den Ansprüchen 1, 11, 12 und 13 angegebenen Erfindungsgegenstände gelöst. Vorteilhafte Ausführungen der Erfindung sind in den Unteransprüchen angegeben.

Die im Folgenden im Zusammenhang mit der Vorrichtung oder dem System erläuterten Vorteile und Ausgestaltungen gelten sinngemäß auch für das erfindungsgemäße Verfahren und umgekehrt.

Im folgenden werden die Begriffe Wärme und Wärmeenergie gleichbedeutend verwendet. Je nach Ablauf- bzw. Betrachtungsrichtung des thermodynamischen Prozesses, kann es sich bei jedem beschriebenen Aufheizvorgang, d. h. bei jedem beschriebenen Erwärmen, auch um einen Abkühlvorgang handeln. Jedes zu einem bestimmten Zeitpunkt wärmeaufnehmendes Medium kann zu einem anderen Zeitpunkt als ein wärmeabgebendes Medium dienen und umgekehrt. Bei dem zu erwärmenden Medium handelt es sich vorzugsweise um ein in dem Pufferspeicher einer Heizungsanlage verwendbares Fluid, insbesondere um eine Flüssigkeit.

Die erfindungsgemäße Vorrichtung zum Erwärmen eines Mediums umfaßt einen Behälter für das zu erwärmende Medium und ein Funktionselement, wobei das Funktionselement im wesentlichen aus einem CFK-Material, also einem kohlenstofffaserverstärkten Kunststoff besteht, das Funktionselement steuerbar elektrisch aufheizbar ist, zu welchem Zweck es über elektrische Anschlüsse verfügt, und das Funktionselement für eine direkte Wärmeübertragung von dem Funktionselement in das Medium ausgebildet ist.

Das erfindungsgemäße Verfahren zum Erwärmen eines Mediums mittels eines im wesentlichen aus einem CFK-Material bestehenden Funktionselements zeichnet sich dadurch aus, daß eine direkte Wärmeübertragung von dem Funktionselement in das Medium erfolgt und das Funktionselement gesteuert elektrisch aufgeheizt wird.

Eine Grundidee der Erfindung ist es, zur Erwärmung eines Mediums ein Funktionselement zu verwenden, das sich durch drei wesentliche Merkmale auszeichnet. Zum einen besteht das Funktionselement im wesentlichen aus einem CFK-Material. Darunter wird ein Verbundwerkstoff verstanden, bei dem Schichten von Kohlenstofffasern in Kunststoff eingebettet sind. Zum anderen verfügt das CFK-Material über elektrische Anschlüsse, wodurch es steuerbar aufgeheizt werden kann. Drittens ist das Funktionselement derart ausgebildet und/oder angeordnet, daß eine direkte Wärmeübertragung in das zu erwärmende Medium erfolgt. Dadurch werden Übertragungsverluste minimiert.

Daß das Funktionselement "im wesentlichen" aus einem CFK-Material besteht, bedeutet, daß es vollständig oder nahezu vollständig aus einem CFK-Material besteht. So kann das Funktionselement beispielsweise Konstruktionselemente umfassen, welche nicht aus CFK-Material gefertigt sind, beispielsweise elektrische Anschlüsse, Halte- oder Befestigungselemente oder dergleichen. Das Funktionselement kann eine beliebige Form aufweisen. So kann das Funktionselement zur wenigstens teilweisen Umhüllung oder Umfassung eines Behälters oder eines sonstigen Bauelements ausgebildet sein. Das Funktionselement kann auch Bauelemente, wie beispielsweise Rohrleitungen oder dergleichen, vollständig umhüllen derart, daß diese Bauelemente in dem Funktionselement zumindest teilweise eingebettet sind.

Für eine besonders effiziente Wärmeübertragung in das zu erwärmende Medium hat es sich als vorteilhaft erwiesen, wenn das Funktionselement großflächige Funktionsflächen, also insbesondere eine besonders große Oberfläche aufweist. Zu diesem Zweck weist das Funktionselement vorzugsweise eine Form auf, die eine besonders große Oberfläche bereitstellt, wie etwa in Form von Wellen, Streifen oder Gittern.

"Direkte Wärmeübertragung" bedeutet, daß die Wärmeübertragung von dem Funktionselement unmittelbar auf das zu erwärmende Medium oder anders ausgedrückt unmittelbar in das zu erwärmende Medium hinein erfolgt. Mit anderen Worten erfolgt die Wärmeübertragung ohne ein zusätzliches Wärmeübertragungsmedium oder Zwischenmittel, abgesehen von einer eventuell vorhandenen Behälterwand, welche das Medium von dem Funktionselement trennt. Anders ausgedrückt erfolgt die Wärmeübertragung ohne Inanspruchnahme bzw. ohne Zwischenschaltung eines weiteren, sich bewegenden oder bewegbaren Mediums oder Zwischenmittels. Vorzugsweise erfolgt die Wärmeübertragung dabei durch Wärmeleitung. Ein Anteil der Wärmeübertragung kann über Wärmestrahlung erfolgen. Eine Wärmeübertragung durch Konvektion findet nicht statt.

Das Funktionselement ist elektrisch aufheizbar und kann als einzige Wärmequelle für das Erwärmen des Mediums dienen. In einer weiteren Ausführungsform der Erfindung erfolgt die Wärmeübertragung direkt in das Medium durch das Funktionselement hindurch. In diesem Fall dient das Funktionselement zur Übertragung der Wärmeenergie von einer von dem zu erwärmenden Medium beabstandeten und außerhalb des Funktionselements angeordneten Wärmequelle zu dem zu erwärmenden Medium. Auch in diesen Fall erfolgt die Wärmeübertragung von dem Funktionselement auf das zu erwärmende Medium unmittelbar und ohne die Verwendung eines Zwischenmittels.

Das Aufheizen des Funktionselements erfolgt nach dem Grundprinzip einer Widerstandsheizung. Das CFK-Material weist eine gute elektrische Leitfähigkeit bei geringem elektrischen Widerstand auf. Versuche haben ergeben, daß bei einem Stromfluß durch das CFK-Material die gesamte elektrische Energie in Heizleistung umgewandelt wird.

Die elektrischen Anschlüsse des Funktionselements sind vorzugsweise als flexible, isolierte Kupferleitungen ausgeführt. Sie sind vorzugsweise nur im Randbereich des Funktionselements angeordnet. Vorteilhafterweise sind die Kupferleitungen in das CFK-Material eingebettet.

Das Funktionselement ist als einteiliges, vorzugsweise massives Bauteil nach Art eines Blocks aufgebaut. Das Bauteil ist dadurch jederzeit einfach austauschbar, beispielsweise im Fall einer Reparatur. Alternativ besteht das Funktionselement aus mehreren, vorzugsweise massiven Bauteilen, die jeweils über elektrische Anschlüsse verfügen und zur Bildung des Funktionselements in Parallel- oder Serienschaltung miteinander verknüpft sind. Hierdurch werden in einer besonders vorteilhaften Ausführungsform der Erfindung für ein Funktionselement mehrere Heizzonen definiert, die - je nach Bedarf und Verbrauch - einzeln angesteuert bzw. geregelt werden können.

In einer weiteren Ausführungsform der Erfindung werden die beiden oben genannten Übertragungsmöglichkeiten kombiniert. In diesem Fall wird nicht nur Wärme von einer externen Wärmequelle durch das Funktionselement hindurch in das Medium eingebracht, wobei das Funktionselement als Übertragungsmedium dient, beispielsweise zur Übertragung von Wärmeenergie von einer wärmeabgebenden Einspeiseleitung zu einer zu erwärmenden Entnahmeleitung, sondern das Funktionselement selbst dient als zusätzliche elektrische Heizung für das zu erwärmende Medium. Mit anderen Worten erfolgt durch die Stromsteuerung ein zusätzliches Aufheizen und damit ein zusätzlicher Wärmeeintrag. Beispielsweise kann ein durch Solarthermie bereits auf eine Temperatur von 40°C aufgeheiztes Wasser durch die Stromheizung des Funktionselements auf eine Temperatur von 60°C nachgeheizt werden, so daß die Erwärmung des Puffermediums mit der höheren Temperatur erfolgt.

Das erfindungsgemäße System umfaßt wenigstens eine Vorrichtung nach einem der Ansprüche 1 bis 10 und ein Steuergerät zum Steuern und/oder Regeln des Aufheizens des wenigstens einen Funktionselements. Mit anderen Worten wird das gesteuerte Aufheizen des Funktionselements nicht manuell, sondern vorteilhafterweise mit Hilfe eines Steuergeräts durchgeführt. Dabei werden Stromstärke und/oder Spannung und/oder deren Zeitverlauf eingestellt. Das Steuergerät ist dabei vorzugsweise rechnergeführt und arbeitet selbstständig unter Berücksichtigung weiterer Parameter des Heizkreislaufs der Heizungsanlage.

In Ergänzung der ohnehin guten Wärmeleitfähigkeit von CFK-Material können die Wärmeübertragungseigenschaften des CFK-Materials durch eine gezielte Materialauswahl und/oder eine gezielte Strukturierung des CFK-Materials bei der Herstellung des Funktionselements beeinflußt werden. Dabei spielt besonders die Wahl eines geeigneten Schichtaufbau sowie der Faserverlauf eine wesentliche Rolle. Mit Hilfe eines geeigneten Schichtaufbaus und/oder Faserverlaufs können, anders ausgedrückt, die Eigenschaften des Funktionselements an den gewünschten Anwendungsfall angepaßt werden. Dies betrifft neben dem eigentlichen Aufheizvorgang des Funktionselements auch die Wärmespeicherung im Funktionselement und die Wärmeabgabe von dem Funktionselement an das Medium, insbesondere also die Wärmeübertragungseigenschaften des CFK-Materials. So kann durch einen geeigneten Schichtaufbau und/oder Faserverlauf eine besonders schnelle oder auch eine besonders langsame Wärmeabgabe von dem Funktionselement auf das zu erwärmende Medium erreicht werden.

Zusätzlich oder alternativ zu einer direkten Steuerung des Aufheizens des Funktionselements mit Hilfe des Steuerelements und einer indirekten Beeinflussung des Aufheizvorgangs bzw. der Wärmespeicherungs- und Wärmeabgabevorgänge in dem Funktionselement durch eine geeignete Auswahl des CFK-Materials und/oder des Schichtaufbaus kann das Verfahren in einer weiteren Ausführungsform der Erfindung dadurch beeinflußt werden, daß das Funktionselement eine Mehrzahl elektrischer Anschlüsse aufweist, die in Abhängigkeit von dem Schichtaufbau des CFK-Materials und/oder anderen strukturellen Eigenschaften des CFK-Materials derart positioniert sind, daß durch eine geeignete Ansteuerung unterschiedlicher Anschlüsse des Funktionselements die Aufheiz-, Wärmespeicherungs- und/oder Wärmeübertragungseigenschaften des Funktionselements gezielt variiert werden. Hierdurch können einerseits verschiedene Heizzonen in einem mehrere Bauteile aufweisenden Funktionselement definiert werden. Andererseits können damit solche Heizzonen auch in einem Funktionselement verwirklicht werden, welches nur ein einziges, entsprechend aufgebautes Bauteil aufweist.

Das Funktionselement liegt zur Gewährleistung der direkten Wärmeübertragung vorzugsweise nach Art einer Hülle zumindest abschnittsweise an der Wand des Behälters des zu erwärmenden Mediums an. Diese Ausführungsform der Erfindung ist besonders vorteilhaft, weil bestehende Behälter einfach nachgerüstet werden können. Das Funktionselement kann jedoch zumindest abschnittsweise auch selbst als Behälterwand dienen. Gegebenenfalls ist es in diesem Fall mit einem Schutzelement, beispielsweise einer Folie oder dergleichen zu versehen, um eine ungewünschte Wechselwirkung zwischen dem CFK-Material einerseits und dem Medium andererseits zu vermeiden. Das Funktionselement kann drittens aber auch zumindest teilweise im Inneren des Behälters für das zu erwärmende Medium angeordnet sein. Wesentlich ist, daß das Funktionselement wenigstens einen unmittelbaren Berührungskontakt mit dem zu erwärmenden Medium selbst oder aber mit einer Wand des Behälters aufweist, der das zu erwärmende Medium enthält. Es versteht sich von selbst, daß der Behälter aus einem für eine Wärmeübertragung geeigneten Material besteht, so daß eine ausreichende Wärmeleitung möglich ist.

Es ist von Vorteil, daß der Behälter des zu erwärmenden Mediums nicht vollständig von dem Funktionselement umhüllt sein muß. Je nach Form und Größe des Behälters ergibt sich eine für den jeweiligen Anwendungsfall optimale Kontaktfläche. Bei einem rohrförmigen Behälter kann es beispielsweise ausreichend sein, 50% der Mantelfläche mit dem Funktionselement abzudecken. Unabhängig davon, wieviel Prozent der Fläche des Mediumbehälters bzw. der Medienbehälter in Berührungskontakt mit dem Funktionselement stehen, sind Mediumbehälter und Funktionselement vorteilhafterweise derart in Form und Größe aufeinander abgestimmt, daß Luftstrecken minimiert und wenn möglich vollständig vermieden werden. Als vorteilhaft erweist sich dabei, daß aufgrund der Materialeigenschaften des CFK-Materials die Form des Funktionselements bei dessen Herstellung nahezu völlig frei gestaltbar ist.

Insbesondere für den Fall, daß eine direkte Wärmeübertragung in das Medium (auch) durch das Funktionselement hindurch erfolgt, hat es sich als sehr effektiv erwiesen, daß das dem Behälter für das zu erwärmende Medium zugeordnete Funktionselement zugleich einem zweiten Behälter für ein wärmeabgebendes Medium zugeordnet ist, welches als externe Wärmequelle dient. Das Funktionselement steht dabei nicht nur mit dem zu erwärmenden Medium bzw. dem Behälter des zu erwärmenden Mediums, sondern, so wie oben im Bezug auf den ersten Behälter beschrieben, auch mit dem wärmeabgebenden Medium direkt und/oder mit dem Behälter für das wärmeabgebende Medium in unmittelbarem Berührungskontakt.

Der Behälter für das zu erwärmende Medium bzw. das wärmeabgebende Medium kann jede beliebige Form aufweisen. Unter einem Behälter wird auch ein Behälterabschnitt, z. B. der Abschnitt einer Rohrleitung, verstanden.

Erfindungsgemäß wird die Vorrichtung nach einem der Ansprüche 1 bis 10 oder das System nach Anspruch 11 als Wärmetauscher oder als Teil eines Wärmetauschers in einer Heizungsanlage, vorzugsweise im Heizkreislauf einer Solarthermie-Anlage verwendet. Dementsprechend handelt es sich bei dem zu erwärmenden Medium und/oder dem wärmeabgebenden Medium vorzugsweise um ein zur Verwendung in einem Pufferspeicher einer Heizungsanlage geeignetes Medium, insbesondere um ein fluides Medium, wie Wasser, oder aber um ein Phasenwechselmaterial (PCM), beispielsweise auf Paraffin-Basis. Die Erfindung läßt sich dabei sowohl zum Einspeisen, als auch zum Entnehmen von Wärme einsetzen. Darüber hinaus ist eine Verwendung in Kombination mit herkömmlichen Verfahren mit indirekter Wärmeübertragung, also mit Verwendung von Wärmeübertragungsmedien, möglich.

Zwar ist der Einsatz von CFK-Material für Wärmetauscher aus dem Stand der Technik grundsätzlich bekannt. Allerdings erfolgt in diesen Fällen kein steuerbares elektrisches Aufheizen des CFK-Materials. Insbesondere die damit im Zusammenhang stehenden Vorzüge der Erfindung führen zu einer Effizienzsteigerung bei der Anwendung der Erfindung bei Wärmeübertragungsprozesse, beispielsweise in Heizungsanlagen.

Die Vorteile der vorliegenden Erfindung zeigen sich bei dem Einsatz in Heizungsanlagen insbesondere bei einer Verwendung zur direkten Wärmeübertragung von einer Einspeiseleitung auf eine Entnahmeleitung, beispielsweise in einer Solarthermie-Anlage, und bei der Verwendung in einem direkt an einem PCM-Behälter angebrachten Flächenwärmetauscher. Da kein Umweg über ein Zwischenmittel erfolgt, sondern stets eine direkte Wärmeübertragung vorliegt, erfolgt das Erwärmen des jeweiligen Mediums auf sehr effiziente Art und Weise. Die Übertragungsverluste sind minimal, weil die Wärme durch das Aufheizen des an das zu erwärmende Medium angrenzenden Funktionselements in unmittelbarer Nähe zu dem zu erwärmenden Medium erzeugt wird.

Der erfindungsgemäße Wärmetauscher kann jedoch nicht nur in Heizanlagen, sondern auch im Zusammenhang mit anderen Anwendungen verwendet werden.

Ausführungsbeispiele der Erfindung werden nachfolgend anhand der Zeichnungen näher erläutert. Hierbei zeigen:
- Fig. 1: eine schematische Darstellung eines Puffertanks mit einer Einspeise- bzw. Entnahmeleitung,
- Fig. 2: eine Schnittdarstellung durch ein Funktionselement mit einer Einspeiseleitung und einer Entnahmeleitung,
- Fig. 3: eine schematische Darstellung eines Puffertankes mit Flächenwärmetauschern sowie mit PCM-Behältern, welche mit Funktionselementen versehen sind,
- Fig. 4: eine Schnittdarstellung durch einen PCM-Pufferspeicher kompakter Bauart,
- Fig. 5: eine perspektivische Darstellung eines als Flächenwärmetauschers ausgebildeten Funktionselements,
- Fig. 6: eine Schnittdarstellung des Flächenwärmetauschers aus Fig. 5.

Sämtliche Figuren zeigen die Erfindung lediglich schematisch und mit ihren wesentlichen Bestandteilen. Gleiche Bezugszeichen entsprechen dabei Elementen gleicher oder vergleichbarer Funktion.

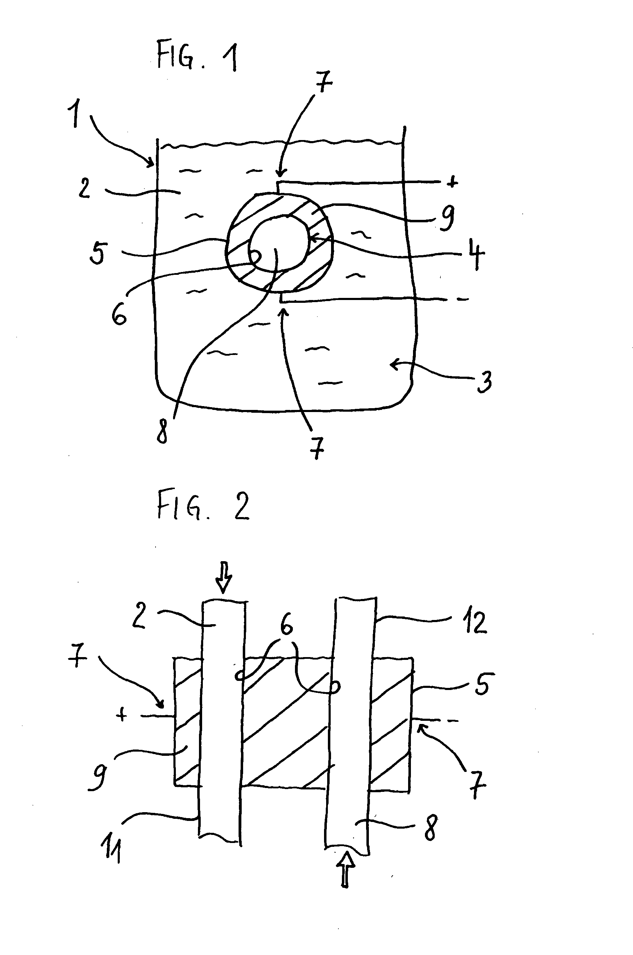

Unter Bezugnahme auf Fig. 1 wird eine erste Ausführungsform der Erfindung beschrieben. In einem Puffertank 1 einer Heizungsanlage befindet sich ein Puffermedium 2, beispielsweise Paraffin. Im Inneren 3 des Puffertanks 1 und durch den Puffertank 1 hindurch verlaufen eine oder mehrere Rohrleitungen 4. Die Rohrleitungen 4 sind zumindest abschnittsweise von einem Funktionselement 5 aus CFK-Material 9 umhüllt. Dabei liegt das Funktionselement 5 unmittelbar an der Rohrleitungswand 6 an. Das Funktionselement 5 verfügt in dem dargestellten Beispiel über zwei elektrische Anschlüsse 7, die zum steuerbaren elektrischen Aufheizen des Funktionselements 5 mit einem Steuergerät (nicht abgebildet) verbunden sind. Die elektrischen Anschlüsse 7 sind symbolisch mit dem Zeichen "+" bzw. "-" versehen, ohne daß dies im Hinblick auf die Art und Weise des elektrischen Anschlusses einschränkend zu verstehen ist.

In dem Fall, daß Wärmeenergie in das Puffermedium 2 eingetragen werden soll, es sich also bei dem Puffermedium 2 um das zu erwärmende Medium handelt, dient das durch die Rohrleitung 4 strömende Medium 8, z.B. Wasser, als Wärmequelle. Von diesem wärmeabgebenden Medium 8 erfolgt eine direkte Wärmeübertragung über das thermisch leitfähige Funktionselement 5 in das Puffermedium 2. Der Wärmeeintrag kann durch ein elektrisches Beheizen des Funktionselements 5 unterstützt werden. Da die Heizwärme in unmittelbarer Nähe des Puffermediums 2 erzeugt wird, erfolgt der Wärmeübertrag sehr effizient. Die Übertragungsverluste sind minimal. Diese Variante ist besonders dann sinnvoll, wenn das wärmeabgebende Medium 8, beispielsweise als Teil eines Heizkreislaufs einer Solarthermie-Anlage, zeitweise eine nicht optimale, zu niedrige Temperatur aufweist. Mit Hilfe des Funktionselements 5 kann dann besonders einfach und effektiv die gewünschte Optimaltemperatur zum Aufheizen des Puffermediums 2 erreicht werden.

Handelt es sich bei den durch den Puffertank 1 führenden Rohrleitungen 4 um Entnahmeleitungen, gilt das oben gesagte entsprechend. Das Puffermedium 2 dient dann als wärmeabgebendes Medium, während das in den Rohrleitungen 4 geführte Fluid, beispielsweise Wasser, das zu erwärmende Medium 8 darstellt. Auch hier erfolgt eine direkte Wärmeübertragung mit minimalen Übertragungsverlusten und die in das zu erwärmende Medium 8 einzubringende Wärmeenergie kann, falls erforderlich, unter Verwendung der Stromheizung des Funktionselements 5 erhöht werden.

Unter Bezugnahme auf Fig. 2 wird eine weitere Ausführungsform der Erfindung beschrieben. Abgebildet sind eine Einspeiseleitung 11 und eine Entnahmeleitung 12 einer Heizungsanlage mit gegenläufig strömenden Medien 2, 8, beispielsweise Wasser, wobei sich die Temperaturen der in den Leitungen 11, 12 transportierten Medien 2, 8 voneinander unterscheiden. In diesem Fall dient ein erfindungsgemäßes Funktionselement 5 als unmittelbar sowohl an der Einspeiseleitung 11, als auch an der Entnahmeleitung 12 angebrachter Wärmetauscher. Ein Zwischenmittel, beispielsweise Wasser, ist nicht erforderlich. Die Wärmeübertragung erfolgt nahezu verlustfrei und kann, nach Bedarf, durch die Strombeheizung des Funktionselements 5 unterstützt werden.

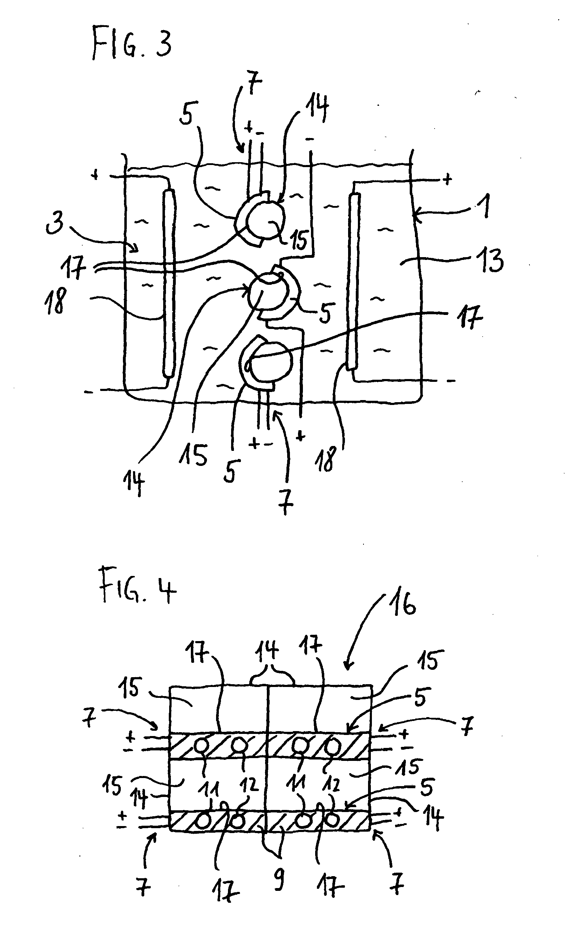

Ein weiteres Ausführungsbeispiel der Erfindung wird im Zusammenhang mit Fig. 3 beschrieben. In einem Puffertank 1, in dem sich ein Wärmeübertragungsmedium 13, beispielsweise Wasser, befindet, sind Behälter 14 angeordnet, in denen sich Phasenwechselmaterialien 15 befinden. Unmittelbar an den PCM-Behältern 14 sind Funktionselemente 5 als Wärmetauscher angebracht, welche die Behälter 14 teilweise umhüllen. Die Funktionselemente 5 liegen dabei unmittelbar an den Wänden 17 der PCM-Behälter 14 an. Zusätzlich sind weitere Funktionselemente 18 als Flächenwärmetauscher in dem Puffertank 1 vorgesehen. Das Aufheizen der Phasenwechselmaterialien 15 erfolgt dann auf herkömmliche Art und Weise dadurch, daß Wärmeenergie in das Wärmeübertragungsmedium 13 eingebracht wird und von dem Wärmeübertragungsmedium 13 auf das Phasenwechselmaterial 15 übergeht und/oder unter Zuhilfenahme der Strombeheizung derjenigen Funktionselemente 5, die unmittelbar an den PCM-Behältern 14 angebracht sind und/oder unter Zuhilfenahme derjenigen Funktionselemente 18, die als weitere Wärmetauscher in dem Wärmeübertragungsmedium 13 angeordnet sind. Bei Bedarf können die an den Behältern 14 vorgesehenen Funktionselemente 5 gleichzeitig das Phasenwechselmaterial 15, als auch das Wärmeübertragungsmedium 13 erwärmen, auch wenn keine zusätzlichen Funktionselemente 18 vorgesehen sind. Besonders vorteilhaft ist in diesem Zusammenhang die Verwendung von Funktionselementen 5 mit mehreren Heizzonen, da es dies ermöglicht, das Phasenwechselmaterial 15 und das Wärmeübertragungsmedium 13 gezielt unterschiedlich zu erwärmen. Im Fall der Wärmeentnahme können die Funktionselemente 5 die Wärmeabgabe der Phasenwechselmaterialien 13 bzw. die Funktionselemente 18 die Wärmeabgabe des gegebenenfalls zugleich als Puffermedium dienenden Wärmeübertragungsmediums 13 unterstützen.

Darüber hinaus ist es möglich, die in Fig. 2 dargestellte direkte Ankopplung der Entnahmeleitung 12 an die Einspeiseleitung 11 mit der in Fig. 1 und der in Fig. 3 dargestellten Anwendungsvariante zu kombinieren. So können beispielsweise die an PCM-Behältern 14 vorgesehen Funktionselemente 5 zugleich mit Einspeise- und/oder Entnahmeleitungen 11, 12 kombiniert werden. Eine solche Variante, bei dem zudem kein Wärmeübertragungsmedium, insbesondere kein zusätzliches bewegtes oder bewegbares Wärmeübertragungsmedium, mehr verwendet wird, ist in Fig. 4 dargestellt. Mit dieser Variante lassen sich sehr kompakte Pufferspeicher 16 realisieren. In Fig. 4 abgebildet sind vier PCM-Behälter 14, befüllt mit Phasenwechselmaterialien 15. An den Wänden 17 der PCM-Behälter 14 liegen Funktionselemente 5 an. Dabei ist jedem PCM-Behälter 14 wenigstens ein Funktionselement 5 zugeordnet. Die Funktionselement 5 sind dabei derart angeordnet, daß zumindest einige Funktionselemente 5 des Pufferspeichers 16 an zwei PCM-Behältern 14 anliegen.

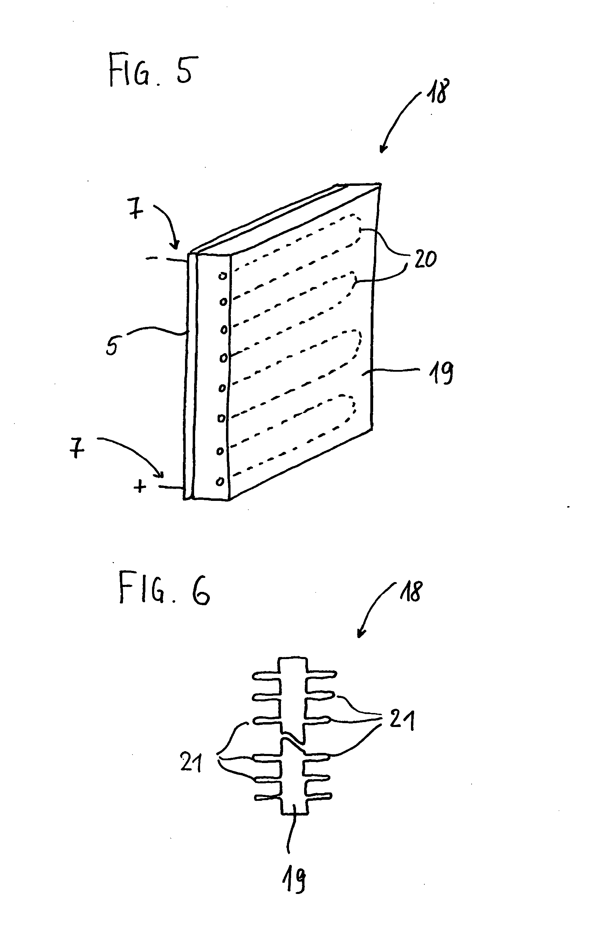

Fig. 5 illustriert ein als Flächenwärmetauscher dienendes Funktionselement 18, wie es bereits im Zusammenhang mit der in Fig. 3 dargestellten Ausführungsform der Erfindung beschrieben wurde. Das Funktionselement 18 ist in einem Behälter 1 angeordnet, der mit Paraffin 2 als Speichermedium gefüllt ist. Das Funktionselement 18 besteht im wesentlichen aus einem plattenförmigen Grundelement 19, in das Wärmetauscherrohre 20 aus Kupfer oder Edelstahl voneinander beabstandet eingebettet sind. Das Grundelement 19 kann, wie die oben beschriebenen Funktionselemente 5, aus CFK-Material bestehen. In einer alternativen Ausführung, wie in Fig. 5 dargestellt, besteht das Grundelement 19 im wesentlichen aus einem Kupfer-Graphit-Harz-Glasfaser-Gemisch. Die Grundplatte 19, die beispielsweise eine Stärke von 1,5 mm aufweist, wird in einer bevorzugten Ausführungsform der Erfindung so hergestellt, daß eine Glasfasermatte in einem Injektionsverfahren mit einer Harzlösung getränkt wird, wobei der Harzlösung neben einem Härter etwa 30 Gewichtsprozent Kupferpartikel mit einem Durchmesser zwischen 150 µm und 400 µm sowie etwa 40 Gewichtsprozent hochleitfähiges Graphit, jeweils bezogen auf 100% Harzanteil, beigemischt sind. Auf die so erzeugte Platte 19 wird auf einer Seite ein mit elektrischen Anschlüssen 7 versehenes Funktionselement 5 flächig angebracht, während an der gegenüberliegenden Seite der Platte 19 Wärmetauscherrohre 20 aus Kupfer oder Edelstahl aufgebracht und mit dem Harzgemisch eingegossen werden.

Das Aufheizen des Paraffins 2 erfolgt durch Übertragung der Wärmeenergie von einem sich in den Wärmetauscherrohren 20 befindenden wärmeren Medium 8 über das Funktionselement 18 in das Paraffin 2. Aufgrund der durch das plattenförmige Grundelement 19 zur Verfügung gestellten großflächigen Kontaktfläche wird ein sehr effizientes Aufheizen des Paraffins 2 erreicht, wobei das Paraffin 2 bei entsprechender Anordnung des Funktionselements 18 in dem Behälter 1 im wesentlichen frei von Schichten unterschiedlicher Temperatur ist.

Die Wärmeübertragung von dem Medium 8 auf das Paraffin 2 bzw. von dem Paraffin 2 in das Medium 8 wird in einer vorteilhaften Ausführungsform durch eine Vergrößerung der Oberflächen durch beidseitig an dem Grundkörper 19 angeordnete, in das Paraffin 2 hineinragende Rippen 21 optimiert, was besonders bei der Verwendung mit PCM-Materialien von Vorteil ist. Die Anordnung dieser Rippen 21, die in Fig. 5 nicht dargestellt sind, ergibt sich aus der Schnittdarstellung der Funktionselements 18 in Fig. 6. Die Rippen sind vorzugsweise aus dem oben beschriebenen Kupfer-Graphit-Harz-Glasfaser-Gemisch gefertigt, aus dem auch die Grundplatte 19 besteht.

Kann bei der Wärmeentnahme von dem Paraffin 2 in das Medium 8, beispielsweise aufgrund einer Entnahme von Heißwasser an einer Entnahmestelle, beispielsweise dem Badezimmer eines Wohnhauses, ein ausreichendes Aufheizen des Mediums 8 nicht mehr gewährleistet werden, weil die Temperatur des Paraffins 2 zu niedrig ist, wird durch ein vorzugsweise automatisches Ansteuern der CFK-Heizung die notwendige Wärmeenergie zur Übertragung von dem Funktionselement 18 in das Medium 8 bereitgestellt.

Für alle beschriebenen Varianten gilt, daß die Heizleistung der Funktionselemente 5 wesentlich durch den Carbonanteil des CFK-Materials bestimmt wird. Je größer dieser Carbonanteil ist, desto höher ist auch die Heizleistung des Elements. Da bei den erfindungsgemäßen CFK-Heizelementen 5 die gesamte elektrische Energie in Heizleistung umgewandelt wird, ist bei der Anwendung der vorliegenden Erfindung zu beachten, daß eine Erhöhung der Heizleistung zwar mit einem höheren Energieverbrauch, jedoch nicht zwangsläufig mit einer höheren Effizienz verbunden ist. Für den Einsatz mit einem Medium, das Wärme vergleichsweise langsam aufnimmt, wie beispielsweise Wasser, kann daher die Verwendung von Elementen mit geringerer Heizleistung effizienter sein, als die Verwendung von Elementen mit hoher Heizleistung. Für den Einsatz mit Paraffin hingegen können Elemente mit hoher Heizleistung verwendet werden, da Paraffin Wärme schneller aufnimmt. Mit anderen Worten ist eine individuelle Anpassung der Leistung der eingesetzten CFK-Elemente 5 an die Erfordernisse des Einsatzzweckes sinnvoll.

Mit der vorliegenden Erfindung ist es nicht nur möglich, mit Hilfe der Funktionselemente 5 das Phasenwechselmaterial 15 dahingehend anzusteuern, daß es seine Wärme in ein zu erwärmendes Medium, beispielsweise Wasser, abgibt und dieses so auf Temperatur hält. Es ist ebenfalls möglich, gleichzeitig unterschiedliche Medien (beispielsweise Wasser, PCM, etc.), voneinander getrennt und mit verschiedenen Zieltemperaturen, steuerbar zu erwärmen, sowie diesen Medien, auch einzeln und unabhängig voneinander, Wärme zu entnehmen, beispielsweise mit Hilfe von Tauschrohren aus Kupfer, Edelstahl oder dergleichen.

### Bezugszeichenliste

- 1: Puffertank
- 2: Medium
- 3: Behälterinnenraum
- 4: Rohrleitung
- 5: Funktionselement
- 6: Wand
- 7: elektrischer Anschluß
- 8: Medium
- 9: CFK-Material
- 10: (frei)
- 11: Einspeiseleitung
- 12: Entnahmeleitung
- 13: Wärmeübertragungsmedium
- 14: PCM-Behälter
- 15: Phasenwechselmaterial
- 16: Pufferspeicher
- 17: Wand
- 18: Flächenwärmetauscher
- 19: Grundelement
- 20: Wärmetauscherrohre
- 21: Rippe

## Patentansprüche

1. Vorrichtung zum Erwärmen eines Mediums (2, 8, 15), mit einem Behälter (1, 14) für das zu erwärmende Medium (2, 8, 15) und mit einem Funktionselement (5), wobei
- das Funktionselement (5) steuerbar elektrisch aufheizbar ist, zu welchem Zweck es über elektrische Anschlüsse (7) verfügt und
- das Funktionselement (5) für eine direkte Wärmeübertragung von dem Funktionselement (5) in das Medium (2, 8, 15) ausgebildet ist,
**dadurch gekennzeichnet, daß** das Funktionselement (5) im wesentlichen aus einem kohlenstofffaserverstärkten Kunststoff -Material (9) besteht.

2. Vorrichtung nach Anspruch 1, wobei das Funktionselement (5) an der Wand (6, 17) des Behälters (1, 14) zumindest abschnittsweise nach Art einer Hülle anliegt.

3. Vorrichtung nach Anspruch 1 oder 2, wobei das Funktionselement (5) zumindest abschnittsweise als Behälterwand (6, 17) dient.

4. Vorrichtung nach einem der Ansprüche 1 bis 3, wobei das Funktionselement (5) zumindest teilweise im Inneren (3) des Behälters (1, 14) angeordnet ist.

5. Vorrichtung nach einem der Ansprüche 1 bis 4, mit einer von dem zu erwärmenden Medium (2, 8, 15) beabstandeten und außerhalb des Funktionselements (5) angeordneten Wärmequelle (2, 8, 15), wobei das Funktionselement (5) für eine direkte Wärmeübertragung von der Wärmequelle (2, 8, 15) durch das Funktionselement (5) hindurch in das Medium (2, 8, 15) ausgebildet ist.

6. Vorrichtung nach einem der Ansprüche 1 bis 5, wobei das dem Behälter (1, 14) für das zu erwärmende Medium (2, 8, 15) zugeordnete Funktionselement (5) zugleich einem zweiten Behälter (1, 14) für ein wärmeabgebendes Medium (2, 8, 15) zugeordnet ist.

7. Vorrichtung nach Anspruch 6, wobei das Funktionselement (5) an der Behälterwand (6, 17) des zweiten Behälters (1, 14) zumindest abschnittsweise nach Art einer Hülle anliegt.

8. Vorrichtung nach Anspruch 6 oder 7, wobei das Funktionselement (5) zumindest abschnittsweise als Behälterwand (6, 17) des zweiten Behälters (1, 14) dient.

9. Vorrichtung nach einem der Ansprüche 6 bis 8, wobei das Funktionselement (5) zumindest teilweise im Inneren (3) des zweiten Behälters (1, 14) angeordnet ist.

10. Vorrichtung nach einem der Ansprüche 1 bis 9, wobei das zu erwärmende und/oder das wärmeabgebende Medium (2, 8, 15) ein zur Verwendung in einem Pufferspeicher oder mit einem Pufferspeicher einer Heizungsanlage geeignetes Medium ist, insbesondere Wasser oder ein Phasenwechselmaterial.

11. System mit wenigstens einer Vorrichtung nach einem der Ansprüche 1 bis 10 und mit einem Steuergerät zum Steuern und/oder Regeln des Aufheizens des wenigstens einen Funktionselements (5).

12. Verwendung einer Vorrichtung nach einem der Ansprüche 1 bis 10 oder eines Systems nach Anspruch 11, wobei die Vorrichtung als Wärmetauscher oder als Teil eines Wärmetauschers in einer Heizungsanlage verwendet wird.

13. Verfahren zum Erwärmen eines vorzugsweise zur Verwendung in oder mit einem Pufferspeicher einer Heizungsanlage geeigneten Mediums (2, 8, 15) mittels eines Funktionselements (5), wobei eine direkte Wärmeübertragung von dem Funktionselement (5) in das Medium (2, 8, 15) erfolgt und wobei das Funktionselement (5) gesteuert elektrisch aufgeheizt wird, **dadurch gekennzeichnet, daß** das Funktionselement (5) im wesentlichen aus einem kohlenstofffaserverstärkten Kunststoff -Material (9) besteht.

## Claims

1. Device for heating a medium (2, 8, 15), having a container (1, 14) for the medium (2, 8, 15) to be heated and having a functional element (5),
- the functional element (5) being electrically heatable in a controllable manner, for which purpose it has electrical connections (7), and
- the functional element (5) being configured for a direct transfer of heat from the functional element (5) into the medium (2, 8, 15),
**characterized in that** the functional element (5) consists essentially of a carbon fibre-reinforced plastic material (9).

2. Device according to Claim 1, wherein the functional element (5) at least in sections bears against the wall (6, 17) of the container (1, 14) in the manner of a sleeve.

3. Device according to Claim 1 or 2, wherein the functional element (5) serves at least in sections as a container wall (6, 17).

4. Device according to one of Claims 1 to 3, wherein the functional element (5) is arranged at least partially in the interior (3) of the container (1, 14).

5. Device according to one of Claims 1 to 4, having a heat source (2, 8, 15) which is spaced apart from the medium (2, 8, 15) to be heated and is arranged outside the functional element (5), wherein the functional element (5) is configured for a direct transfer of heat from the heat source (2, 8, 15) through the functional element (5) into the medium (2, 8, 15).

6. Device according to one of Claims 1 to 5, wherein the functional element (5) which is assigned to the container (1, 14) for the medium (2, 8, 15) to be heated is at the same time assigned to a second container (1, 14) for a heat-emitting medium (2, 8, 15).

7. Device according to Claim 6, wherein the functional element (5) at least in sections bears against the container wall (6, 17) of the second container (1, 14) in the manner of a sleeve.

8. Device according to Claim 6 or 7, wherein the functional element (5) serves at least in sections as a container wall (6, 17) of the second container (1, 14).

9. Device according to one of Claims 6 to 8, wherein the functional element (5) is arranged at least partially in the interior (3) of the second container (1, 14).

10. Device according to one of Claims 1 to 9, wherein the medium (2, 8, 15) to be heated and/or the heat-emitting medium (2, 8, 15) is a medium which is suitable for use in a buffer store or with a buffer store of a heating system, in particular water or a phase change material.

11. System having at least one device according to one of Claims 1 to 10 and having a control unit for controlling and/or regulating the heating of the at least one functional element (5).

12. Use of a device according to one of Claims 1 to 10 or of a system according to Claim 11, the device being used as a heat exchanger or as part of a heat exchanger in a heating system.

13. Method for heating a medium (2, 8, 15) which is preferably suitable for use in or with a buffer store of a heating system by means of a functional element (5), wherein a direct transfer of heat is taking place from the functional element (5) into the medium (2, 8, 15), and the functional element (5) is electrically heated in a controlled manner, **characterized in that** the functional element (5) consists essentially of a carbon fibre-reinforced plastic material (9).

## Revendications

1. Dispositif pour le chauffage d'un fluide (2, 8, 15), avec un réservoir (1, 14) pour le fluide à chauffer (2, 8, 15) et avec un élément de fonction (5), dans lequel
- l'élément de fonction (5) peut être chauffé électriquement de façon réglable, raison pour laquelle il dispose de raccords électriques (7), et
- l'élément de fonction (5) est configuré en vue d'un transfert de chaleur direct de l'élément de fonction (5) dans le fluide (2, 8, 15),
**caractérisé en ce que** l'élément de fonction (5) se compose essentiellement d'un matériau de matière plastique (9) renforcé par des fibres de carbone.

2. Dispositif selon la revendication 1, dans lequel l'élément de fonction (5) est appliqué à la paroi (6, 17) du réservoir (1, 14) au moins localement à la manière d'une enveloppe.

3. Dispositif selon la revendication 1 ou 2, dans lequel l'élément de fonction (5) fait office au moins localement de paroi de réservoir (6, 17).

4. Dispositif selon l'une quelconque des revendications 1 à 3, dans lequel l'élément de fonction (5) est disposé au moins en partie à l'intérieur (3) du réservoir (1, 14).

5. Dispositif selon l'une quelconque des revendications 1 à 4, avec une source de chaleur (2, 8, 15) espacée du fluide à chauffer (2, 8, 15) et disposée à l'extérieur de l'élément de fonction (5), dans lequel l'élément de fonction (5) est configuré en vue d'un transfert de chaleur direct de la source de chaleur (2, 8, 15) dans le fluide (2, 8, 15) à travers l'élément de fonction (5).

6. Dispositif selon l'une quelconque des revendications 1 à 5, dans lequel l'élément de fonction (5) associé au réservoir (1, 14) pour le fluide à chauffer (2, 8, 15) est également associé à un deuxième réservoir (1, 14) pour un fluide fournissant de la chaleur (2, 8, 15).

7. Dispositif selon la revendication 6, dans lequel l'élément de fonction (5) est appliqué à la paroi de réservoir (6, 17) du deuxième réservoir (1, 14) au moins localement à la manière d'une enveloppe.

8. Dispositif selon la revendication 6 ou 7, dans lequel l'élément de fonction (5) fait office au moins localement de paroi de réservoir (6, 17) du deuxième réservoir (1, 14).

9. Dispositif selon l'une quelconque des revendications 6 à 8, dans lequel l'élément de fonction (5) est disposé au moins en partie à l'intérieur (3) du deuxième réservoir (1, 14).

10. Dispositif selon l'une quelconque des revendications 1 à 9, dans lequel le fluide à chauffer et/ou le fluide fournissant de la chaleur (2, 8, 15) est un fluide convenant pour une utilisation dans un réservoir tampon ou avec un réservoir tampon d'une installation de chauffage, en particulier l'eau ou un matériau à changement de phase.

11. Système avec au moins un dispositif selon l'une quelconque des revendications 1 à 10 et avec un appareil de commande pour la commande et/ou la régulation du chauffage dudit au moins un élément de fonction (5).

12. Utilisation d'un dispositif selon l'une quelconque des revendications 1 à 10 ou d'un système selon la revendication 11, dans laquelle le dispositif est utilisé dans une installation de chauffage comme échangeur de chaleur ou comme partie d'un échangeur de chaleur.

13. Procédé pour le chauffage d'un fluide (2, 8, 15), convenant de préférence pour une utilisation dans ou avec un réservoir tampon d'une installation de chauffage, au moyen d'un élément de fonction (5), dans lequel on effectue un transfert de chaleur direct de l'élément de fonction (5) dans le fluide (2, 8, 15) et dans lequel on chauffe l'élément de fonction (5) électriquement de façon réglable, **caractérisé en ce que** l'élément de fonction (5) se compose essentiellement d'un matériau de matière plastique (9) renforcé par des fibres de carbone.
